# EUROPÄISCHE PATENTSCHRIFT

(11) **EP 2 990 325 B1**
(45) Veröffentlichungstag und Bekanntmachung des Hinweises auf die Patenterteilung: **11.10.2017**
(21) Anmeldenummer: 15179815.4
(22) Anmeldetag: 05.08.2015
(51) Int. Cl.: B63B 39/06, B63H 25/38

(54) **FLOSSENSTABILISATOR, VERFAHREN UND WASSERFAHRZEUG**
FIN STABILIZER, METHOD AND WATER VESSEL
STABILISATEUR A AILERON, PROCEDE ET NAVIRE

(30) Priorität: 28.08.2014 DE 102014217228
(43) Veröffentlichungstag der Anmeldung: 02.03.2016
(73) Patentinhaber: SKF Blohm + Voss Industries GmbH, 20457 Hamburg (DE)
(72) Erfinder: Zollenkopf, Michael, 22607 Hamburg (DE); Buechler, Dirk, 18273 Güstrow (DE); Danneberg, Kai, 22111 Hamburg (DE); Elsken, Thomas, 18055 Rostock (DE); Knippschild, Lothar, 45277 Essen (DE); Siebrecht, Thomas, 25336 Elmshorn (DE); Spardel, Holger, 20535 Hamburg (DE)
(74) Vertreter: Kuhstrebe, Jochen

(56) Entgegenhaltungen:
- DE-A1-102008 032 144
- DE-U1- 20 314 325
- KR-B1- 101 137 816
- KR-B1- 101 181 799
- SU-A1- 874 477
- US-B1- 8 753 091

## Beschreibung

Die Erfindung betrifft einen Flossenstabilisator zur Stabilisierung eines Wasserfahrzeugs nach dem Oberbegriff des Patentanspruchs 1, ein Verfahren zur Herstellung eines derartigen Flossenstabilisators, sowie ein Wasserfahrzeug.

Flossenstabilisatoren werden an Schiffen gewöhnlich eingesetzt, um bei Seegang Rollbewegungen entgegenzuwirken bzw. zu dämpfen. Die Flossenstabilisatoren werden gewöhnlich unterhalb der Wasserlinie beidseits der Schiffe angeordnet. Da beim Verstellen der Flossenstabilisatoren sehr große Drehmomente in deren zumindest eine Flosse eingeleitet werden, sind die Flossen herkömmlicherweise in Stahlbauweise ausgeführt. Aufgrund der Stahlbauweise haben die Flossen jedoch ein hohes Eigengewicht. Zur Gewichtsreduzierung wird in dem deutschen Patent DE 10 2007 044 698 B4 vorgeschlagen, eine Flosseninnenstruktur in Kunststoffbauweise herzustellen. Hierzu ist eine flossenseitige Aufnahme zum Koppeln mit einer Antriebswelle eines schiffseitigen Flossenantriebs kunststoffbasiert, und ein in eine Flossenhülle eingesetzter Innenkörper ist ebenfalls kunststoffbasiert. Der Innenkörper wird um die Antriebswellenaufnahme sowie um entsprechende Stützelemente gewickelt, anschließend seitlich aufgetrennt und mit einem Schaum ausgefüllt.

Die Druckschruft US 3 818 959 A offenbart eine preisgünstig herzustellende und leicht ersetzbare Stabilisierungsflosse aus Plastikmaterialien für ein Schiff. Aus der Druckschrift DE 34 38 518 A1 ist eine Flosse für ein Wasserfahrzeug bekannt, wobei die Flosse einen das Wasser mit einer Vorderkante durchschneidenden unteren Teil und einen oberen Halteteil aufweist.

Aufgabe der Erfindung ist es, einen Flossenstabilisator zur Stabilisierung eines Wasserfahrzeugs in Leichtbauweise zu schaffen, der bei einem geringen Gewicht eine hohe Stabilität gegen Biegungen, hohe Punktlasten und dergleichen erlaubt. Des Weiteren ist es Aufgabe der Erfindung, ein Verfahren zur Herstellung eines derartigen Flossenstabilisators sowie ein Wasserfahrzeug mit zumindest einer stark reduzierten Rollneigung zu schaffen.

Diese Aufgabe wird gelöst durch einen Flossenstabilisator mit den Merkmalen des Patentanspruchs 1, durch ein Verfahren mit den Merkmalen des Patentanspruchs 14 sowie durch ein Wasserfahrzeug mit den Merkmalen des Patentanspruchs 15.

Ein erfindungsgemäßer Flossenstabilisator zur Stabilisierung eines Wasserfahrzeugs hat zumindest eine Flosse, die über einen wasserfahrzeugseitigen Flossenantrieb verschwenkbar ist. Die Flosse weist eine mittels einer Versteifungsstruktur versteifte Außenhaut auf. Erfindungsgemäß hat die Versteifungsstruktur eine metallbasierte Zentralstruktur mit einer Verbindungseinrichtung zur Wirkverbindung mit dem Flossenantrieb und eine kunststoffbasierte Wickelstruktur.

Erfindungsgemäß ist der Flossenstabilisator in Hybridbauweise hergestellt, wodurch er bei einem verringerten Gewicht hochbelastbar ist. Die metallbasierte Zentralstruktur ermöglicht dabei, dass ein vom Flossenantrieb eingeleitetes Drehmoment auf Dauer und verlässlich in den Flossenstabilisator eingeleitet wird. Eine Zerstörung des Flossenstabilisators bei der Drehmomenteneinleitung oder beim Angriff äußerer Kräfte wird somit verhindert. Ein bevorzugter Werkstoff für die Zentralstruktur ist Stahl. Der Werkstoff Stahl ist im Schiffbau etabliert, einfach zu handhaben und verhältnismäßig kostengünstig. Bevorzugterweise ist die Zentralstruktur geschweißt. Um einer Korrosion der beispielsweise aus Stahl gefertigten Zentralstruktur vorzubeugen bzw. um diese zu verhindern, kann auf die Zentralstruktur eine entsprechende Grundierung aufgetragen sein. Die kunststoffbasierte Wickelstruktur ermöglicht bei einem geringen Gewicht eine hohe Stabilität. Die Wickelstruktur erlaubt zudem eine hohe Flexibilität bzgl. sich abzubildenden Geometrien, da Wickelmaterialien wie Bandbreite, Faserbreite und dergleichen je nach der Komplexität der jeweiligen Geometrie ausgewählt werden kann. Des Weiteren lässt sich das Wickeln grundsätzlich mit einem hohen Automatisierungsgrad durchführen.

Die Wickelstruktur hat bevorzugterweise in eine Kunststoffmatrix eingebettete, sich kreuzende Faserstränge und umgreift die Zentralstruktur. Die Faserstränge der Wickelstruktur haben eine formgebende sowie tragende Funktion und bilden im ausgehärteten Zustand Stäbe welche wiederum in Kombination mit ihren kreuzenden Verläufen ein Fachwerk bilden, das die Drehmomenten- und Kraftübertragung in Stabilisatorabschnitte jenseits der Zentralstruktur ermöglicht. Bevorzugterweise werden die Faserstränge aus mit einem Harz imprägnierten Kohlenstofffasern, Glasfasern, Aramidfasern und der gleichen hergestellt. Aus fertigungstechnischer Sicht ist das Harz bzw. die Kunststoffmatrix bevorzugterweise thermoplastbasiert, kann jedoch auch duroplastbasiert sein.

Bevorzugterweise hat die Zentralstruktur zwei voneinander beabstandete metallbasierte Versteifungselemente, die durch die Verbindungseinrichtung miteinander verbunden sind. Die Versteifungselemente erstrecken sich bevorzugterweise von einer Vorderkante zur Hinterkante des Flossenstabilisators. Vorteilhafterweise geben sie eine Kontur des Flossenstabilisators vor und tragen die Außenhaut. Die Versteifungselemente sind somit vorzugsweise Längsspanten. Insbesondere hat die Zentralstruktur eine H-artige Form, wobei die beiden Versteifungselemente die Belastungen über die Flosse zwischen der Vorderkante und der Hinterkante zuverlässig verteilen. Die Verbindungseinrichtung hat beispielsweise eine zylinderförmige Aufnahme zur Aufnahme einer Antriebswelle des Flossenantriebs.

Zur zusätzlichen Stabilisierung des Flossenstabilisators außerhalb der Zentralstruktur ist es vorteilhaft, wenn die Versteifungsstruktur eine Hilfsstruktur zum zur Zentralstruktur zusätzlichen Aufnehmen bzw. Ablegen der Faserstränge hat. Durch die Hilfsstruktur wird das Bilden der Faserstränge erleichtert und zudem eine Stabilisierung der Wickelstruktur erreicht.

Da über die Hilfsstruktur die Drehmomente zum Verschwenken des Flossenstabilisators im Wesentlichen nicht eingeleitet werden, sondern die Hilfsstruktur vornehmlich eine die Wickelstruktur stützende Funktion hat, können deren Hilfsversteifungen aus einem leichteren bzw. stabilitäts-und/festigkeitsreduzierten Material als die zentralstrukturseitigen Versteifungselemente bestehen. Bevorzugterweise bestehen die Hilfsversteifungen aus Kunststoff bzw. weisen eine Kunststoffmatrix mit eingebetteten Verstärkungsfasern auf. Beispielhafte Verstärkungsfasern sind Kohlenstofffasern, Glasfasern bzw. entsprechende Fasergelege, Fasergewebe und dergleichen. Beispielsweise Matrixwerkstoffe sind Duroplaste und Thermoplaste. Die Hilfsversteifungen erstrecken sich bevorzugterweise von der Vorderkante zur Hinterkante des Flossenstabilisators. Vorteilhafterweise geben sie eine Kontur des Flossenstabilisators vor und tragen die Außenhaut. Die Hilfsversteifungen sind somit vorzugsweise wie die Versteifungselemente Längsspanten.

Zur konturnahen Führung der Wicklungen zwischen den vorzugsweise metallbasierten Versteifungselementen der Zentralstruktur im Bereich der Verbindungseinrichtung ist es vorteilhaft, wenn zwischen den metallbasierten Versteifungselementen zumindest eine Hilfsversteifung der Hilfstruktur angeordnet ist. Außerdem kann hierdurch das eine Versteifungselement weiter mittig der Flosse positioniert werden, wodurch die Drehmomente über einen größeren Bereich in die Flosse eingeleitet werden als bei einer engen Beabstandung der zentralstrukturseitigen Versteifungselemente.

Ein Schutz des Flossenstabilisators vor Beschädigungen bei Kontakt mit einem Hindernis an seiner Flossenspitze lässt sich dadurch erreichen, dass eine flossenspitzenseitige Hilfsversteifung der Hilfsstruktur als ein metallbasiertes Versteifungselement ausgeführt ist. Bevorzugterweise besteht dieses Versteifungselement aus dem gleichen Metallwerkstoff wie die Zentralstruktur. Das Versteifungselement erstreckt sich vorzugsweise wie die übrigen Versteifungselemente zwischen der Vorderkante und der Hinterkante und dient somit als Längsspant.

Die Wickelstruktur weist sehr gute technische Eigenschaften auf, wenn die Faserstränge Faserabschnitte zumindest einer mehrfach verlegten Endlosfaser sind. Diese zumindest eine Endlosfaser wird solange um die Zentralstruktur und/oder die Hilfsstruktur herumgeführt, bis die Faserstränge ihren Soll-Querschnitt bzw. ihre Soll-Stabilität aufweisen.

Ein Zusammenführen der Faserstränge in Kreuzungsbereichen lässt sich vereinfachen, wenn die Faserstränge in Taschen der Versteifungselemente und Hilfsversteifungen hinter Vorsprüngen abgelegt werden. Durch die Vorsprünge wird erreicht, dass die Faserstränge beim Verlegen lagefixiert werden und nicht wieder aus den Taschen hinausrutschen bzw. gezogen werden. Gleichzeitig wird durch die Vorsprünge eine konturnahe Führung der Außenhaut erleichtert.

Um eine Beschädigung der Wickelstruktur bei einem unvorhergesehenen vorderkantenseitigen Aufprall zu vermeiden, kann die Flosse im Bereich ihrer Vorderkante wickelstrukturfrei sein und einen Aufprallschutz aufweisen. Der Aufprallschutz hat beispielsweise eine Vielzahl von in eine Kunststoffmatrix eingebettete Faserstränge. Die Faserstränge und die Kunststoffmatrix bestehen vorzugsweise aus dem gleichen Material wie die der Wickelstruktur. Hierdurch kann die Aufbringung des Aufprallschutzes in der gleichen Vorrichtung wie die Aufbringung der Wickelstruktur erfolgen. Bei einem anderen Ausführungsbeispiel ist der Aufprallschutz ein Rohrkörper, der sich entlang der Vorderkante erstreckt. Der Rohrkörper verfügt aufgrund seiner Form über eine hohe Stabilität und ist beispielsweise in konkave Vertiefungen der Versteifungselemente und Hilfsversteifungen eingesetzt, so dass er umfangsseitig abschnittsweise geführt ist. Bevorzugterweise besteht er aus Stahl bzw. einer Metalllegierung.

Zum Anbringen einer hinterkantenseitigen Schwanzflosse an der Hauptflosse ist es vorteilhaft, wenn die Flosse bzw. dann Hauptflosse hinterkantenseitig wickelstrukturfrei Anbindungsbereiche zum Anbinden der Schwanzflosse aufweist. Hierdurch stellt die Wickelstruktur keine Behinderung für die Anbindung der Schwanzflosse dar, was eine einfache unmittelbare oder mittelbare Befestigung der Schwanzflosse ermöglicht.

Um die Verwendung des Flossenstabilisators auch bei Wasserfahrzeugen mit einem Aluminiumrumpf zu ermöglichen, ist es vorteilhaft, wenn die Außenhaut kunststoffbasiert ist. Hierdurch wird eine Korrosion des Aluminiumrumpfes im Bereich der Flossenstabilisatoren verhindert. Die Außenhaut weist bevorzugterweise eine Vielzahl von harzimprägnierten, faserverstärkten Laminaten auf.

Die Anbindung der Außenhaut an die Wickelstruktur lässt sich zuverlässig durchführen, wenn die Wickelstruktur in einem Verbindungsmaterial eingebettet ist, dass mit der Außenhaut innenseitig verbunden ist. Das Verbindungsmaterial ist beispielsweise ein als Klebstoff wirkender Schaum.

Bei einem erfindungsgemäßen Verfahren zur Herstellung eines erfindungsgemäßen Flossenstabilisators wird zuerst die Versteifungsstruktur aufgebaut. Hierzu werden die Zentralstruktur und die Hilfsstruktur hergestellt. Anschließend werden diese beiden Strukturen von den Fasersträngen umwickelt und somit die Wickelstruktur gebildet. Danach folgt die optionale Bildung des Aufprallschutzes. Anschließend folgt das Aufbringen der Außenhaut. Hierzu wird zumindest ein Außenhautlaminat in eine untere Werkzeugform eines Formwerkzeugs und zumindest ein Außenhautlaminat in eine obere Werkzeugform des Formwerkzeugs eingebracht. Die Außenlaminate werden innenseitig mit einem Verbindungsmaterial versehen, der vorzugsweise so dick aufgetragen wird, dass im ausgehärteten Zustand des Verbindungsmaterials die Wickelstruktur vollständig in diesen eintauchen kann. Dann wird die Versteifungsstruktur des Flossenstabilisators in die untere Werkzeugform eingelegt und die obere Werkzeugform auf dieser abgesenkt. Das Formwerkzeug wird geschlossen und der Flossenstabilisator wird ausgehärtet. Nach dem Aushärten wird das Formwerkzeug geöffnet und Verbindungskanten zwischen der unteren und oberen Außenhaut werden nachbearbeitet.

Das erfindungsgemäße Verfahren zeichnet sich durch eine schnelle, technisch einfache und flexible Ausbildung eines Flossenstabilisators aus. Insbesondere ist bei dem erfindungsgemäßen Verfahren kein druckfestes Formwerkzeug notwendig, da die Außenhaut nur eine geringe Wandstärke aufweist. Als Harzwerkstoff für die Kunststoffmatrix werden Thermoplaste bevorzugte, da diese bis zu ihrer Erstarrung geringere Temperaturen erfordern als Durplaste bis zu ihrer Aushärtung. Die bei Verwendung des erfindungsgemäßen Flossenstabilisators auftretenden Temperaturen liegen weit unter der Erweichungstemperatur der Thermoplaste.

Ein bevorzugtes Wasserfahrzeug hat zumindest einen erfindungsgemäßen Flossenstabilisator. Das Wasserfahrzeug, insbesondere ein Schiff, weist somit hochstabile und in Leichtbau ausgeführte Flossenstabilisatoren auf, die neben einer vereinfachten Montage aufgrund des reduzierten Eigengewichts Rollbewegungen wirkungsvoll entgegenwirken.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:
- Figur 1: eine Vorderansicht eines erfindungsgemäßen Flossenstabilisators, der an einem Schiffrumpf montiert ist,
- Figur 2: ein erstes Ausführungsbeispiel des erfindungsgemäßen Flossenstabilisators,
- Figur 3: eine Detaildarstellung aus Figur 2,
- Figur 4: eine Vorderansicht des ersten Ausführungsbeispiels,
- Figur 5: eine Rückansicht des ersten Ausführungsbeispiels,
- Figur 6: ein zweites Ausführungsbeispiels des erfindungsgemäßen Flossenstabilisators, und
- Figur 7: einen Teilbereich eines dritten Ausführungsbeispiels des erfindungsgemäßen Flossenstabilisators.

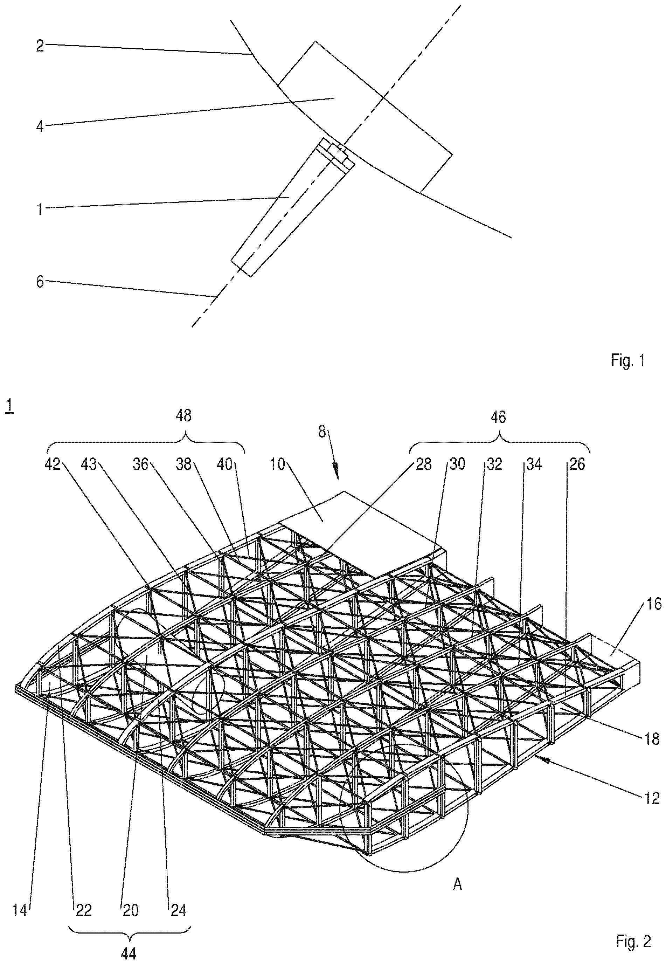

In Figur 1 ist eine Vorderansicht eines erfindungsgemäßen Flossenstabilisators 1 dargestellt, der steuerbordseitig an einem Schiffsrumpf 2 unterhalb einer nicht gezeigten Wasserlinie montiert ist. Backbordseitig ist ein identischer zweiter Flossenstabilisator 1 montiert. Über jeweils einen im Inneren des Schiffrumpfes 2 angeordneten Flossenantrieb 4 ist der jeweilige Flossenstabilisator 1 um eine Schwenkachse 6 verschwenkbar, die sich nahezu in Querrichtung des Flossenstabilisators 1 erstreckt.

Wie in Figur 2 dargestellt, hat der Flossenstabilisator 1 eine als Hauptflosse 8 bezeichnete Flosse mit einer hier nur angedeuteten Außenhaut 10, die über eine Versteifungsstruktur 12 versteift ist. Der Flossenstabilisator 1 hat eine Vorderkante 14, eine Hinterkante 16 sowie eine die Vorderkante 14 mit der Hinterkante 16 verbindende Flossenspitze 18. Di Flossenspitze 18 ist im am Schiff montierten Zustand vom Schiffsrumpf 2 entfernt positioniert. Der Verlauf der Hinterkante 16 ist hier durch eine gestrichelte Linie angedeutet. Zur Herstellung einer Wirkverbindung mit dem Flossenantrieb 4 ist in einem von der Flossenspitze 18 entfernt liegenden Bereich der Versteifungsstruktur 12 eine Verbindungseinrichtung 20 integriert. Die Verbindungseinrichtung 20 ist hier vereinfacht als eine zylinderförmige Antriebswellenaufnahme zur Aufnahme einer entsprechenden Antriebswelle des Flossenantriebs 4 ausgebildet. Um eine effektive Vor-Anker Stabilisierung zu realisieren, ist die Verbindungseinrichtung 20 nahe der Vorderkante 14 und entfernt von der Hinterkante 16 angeordnet.

In dem hier gezeigten Ausführungsbeispiel weist die Versteifungsstruktur 12 drei metallbasierte Versteifungselemente 22, 24, 26, sowie vier kunststoffbasierte Hilfsversteifungen 28, 30, 32, 34 auf. Zudem hat die Versteifungsstruktur 12 eine Vielzahl von Fasersträngen 36, 38, 40, die über die Versteifungselemente 22, 24, 26 sowie die Hilfsversteifungen 28 bis 34 geführt sind und auf diesen sowie zwischen diesen eine Vielzahl von Kreuzungsbereichen 42, 43 bilden. Aus Gründen der Übersichtlichkeit sind lediglich 3 Faserstränge 36, 38, 40 beziffert.

Die Versteifungselemente 22, 24 bestehen aus Metall, bevorzugterweise aus Stahl bzw. einer Metalllegierung, und bilden zusammen mit der ebenfalls aus Metall bestehenden Verbindungseinrichtung 20 eine H-förmige Zentralstruktur 44. Die Zentralstruktur 44 dient zur Aufnahme und Einleitung eines vom Flossenantrieb 4 erzeugten Drehmoments zum Verschwenken des Flossenstabilisators 1 und ist beispielsweise verschweißt. Bevorzugterweise bestehen die Versteifungselemente 22, 24 aus dem gleichen Material bzw. Werkstoff wie die Verbindungseinrichtung bzw. Antriebswellenaufnahme 20.

Die Hilfsversteifungen 28 bis 34 bestehen aus Kunststoff. Sie sind in Querrichtung der Hauptflosse 8 voneinander beabstandet und bilden eine hier mehrteilige Hilfsstruktur 46. Insbesondere dient die Hilfsstruktur 46 zum konturnahen Führen der Faserstränge 36, 38, 40 bzw. zu deren Stützung beim Ablegen. Eine gegenseitige Verbindung der Hilfsversteifungen 28 bis 34 erfolgt über die Faserstränge 36, 38, 40. Zusätzlich können die Hilfsversteifungen 28 bis 34 auch durch entsprechende Verbindungselemente wie beispielsweise Querstreben selbsttätig miteinander verbunden sein. Die Hilfsversteifungen 28 bis 34 bestehen bevorzugterweise aus einem faserverstärkten Kunststoff, in dessen Kunststoffmatrix Verstärkungsfasern wie Kohlenstofffasern, Glasfasern, Aramidfasern und dergleichen als einzelne Fasern, Gelege, Gewebe, etc. eingebettet sind.

Das flossenspitzenseitige Versteifungselement 26 ist metallbasiert und bildet einen Teil der Hilfsstruktur 46. Es besteht bevorzugterweise aus dem gleichen Material wie die Zentralstruktur 44 bzw. deren Versteifungselemente 22, 24. Zur Verdeutlichung der unterschiedlichen Materialien dieses Versteifungselementes 26 und der zentralstrukturseitigen Versteifungselemente 22, 24 gegenüber den Hilfsversteifungen 28 bis 34 sind in sämtlichen Figuren die Versteifungselemente 22, 24, 26 mit einer verstärkten Umrandung gezeichnet. Gegenüber den übrigen Versteifungselementen 22, 24 und Hilfsversteifungen 28 bis 34 ist es verkürzt ausgebildet, wobei es derart in Längsrichtung des Flossenstabilisators 2 versetzt ist, dass die Vorderkante 14 im Bereich des flossenspitzenseitigen Versteifungselementes 26 in Richtung der Hinterkante 16 abgewinkelt ist. Die Hinterkante 16 ist bevorzugterweise über die gesamte Versteifungsstruktur 12 geradlinig ausgebildet.

Die Versteifungselemente 22, 24, 26 und die Hilfsversteifungen 28 bis 34 sind als Längsspanten ausgeführt und erstrecken sich jeweils von der Vorderkante 14 bis zur Hinterkante 16. Sie tragen die Außenhaut 10 bzw. nehmen diese auf und geben demensprechend die Form des Flossenstabilisators 1 vor. In Querrichtung des Flossenstabilisators 1 sind sie gleichmäßig voneinander beabstandet, wobei zwischen den hier lediglich beiden Versteifungselementen 22, 24 der Zentralstruktur 44 mittig eine der Hilfsversteifungen 28 angeordnet ist.

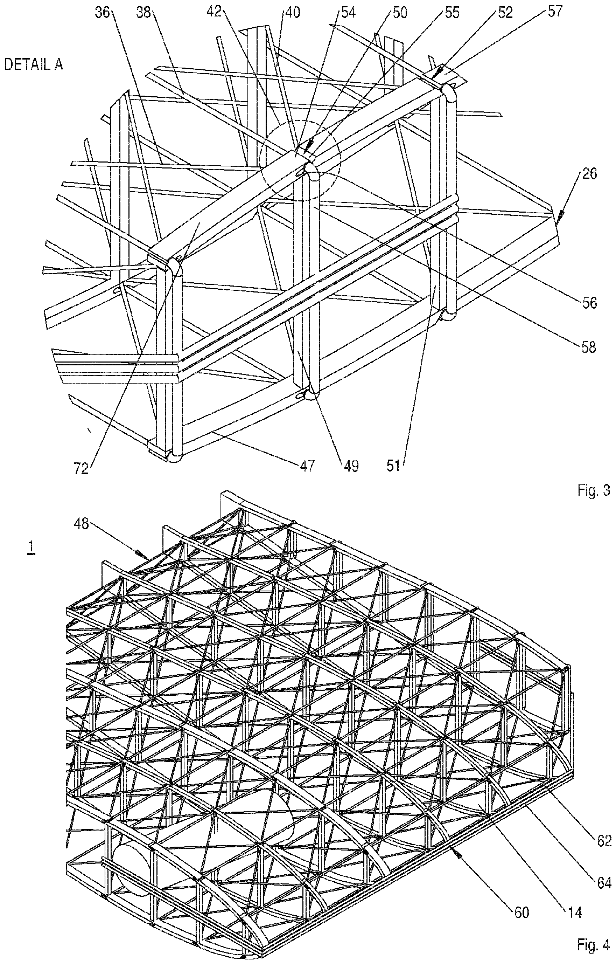

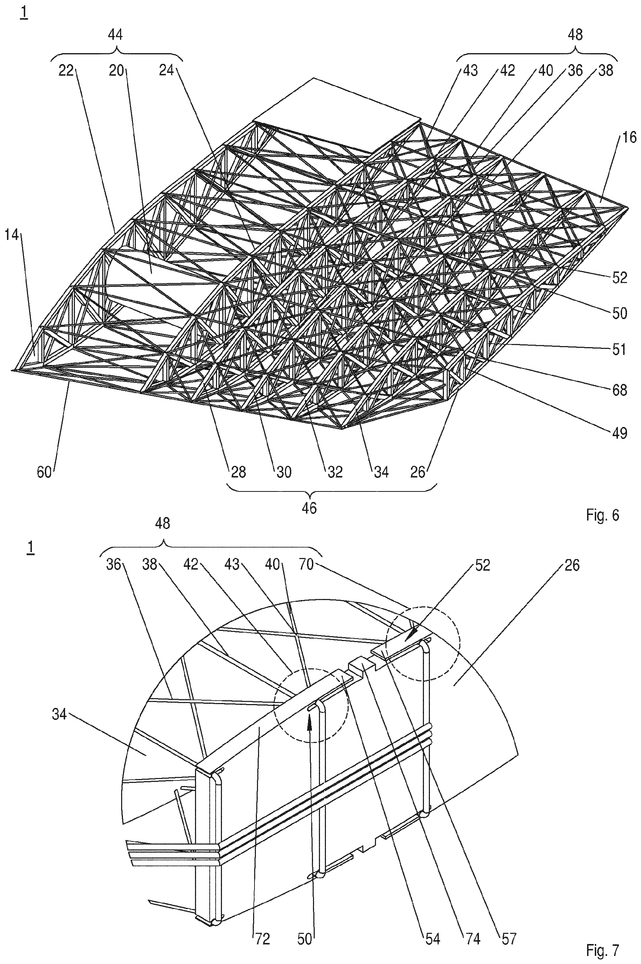

In dem hier, in Figur 2 gezeigten ersten Ausführungsbeispiel, sind die Versteifungselemente 22, 24, 26 und die Hilfsversteifungen 28 bis 34 als Gitterelemente dargestellt. Sie haben jeweils einen Längsrahmen 47, der über sich in Hochrichtung des Flossenstabilisators 1 erstreckende parallele Stege 49, 51 verstärkt ist (siehe Detaildarstellung in Figur 3). Wie in Figur 6 noch erläutert wird, können die Versteifungselemente 22, 24, 26 und/oder Hilfsversteifungen 28 bis 34 auch als plattenförmige Vollelemente ausgeführt sein.

Gemäß Figur 2 bilden die Faserstränge 36, 38, 40 eine die Zentralstruktur 44 und die Hilfsstruktur 46 umgreifende Wickelstruktur 48. Insbesondere dient die Wickelstruktur 48 zur Stabilisierung des Flossenstabilisators 1. Die Faserstränge 36, 38, 40 werden bevorzugterweise durch das mehrmalige Abwickeln von zumindest einer Faser gebildet, bis in eine Kunststoff- bzw. Harzmatrix eingebettete Faserbündel bzw. die Faserstränge 36, 38, 40 gebildet sind. Die zumindest eine Faser ist hierzu mit einem Harz imprägniert. Die Faserführung ist derart, dass sowohl unmittelbar auf den Versteifungselemente 22, 24, 26 und den Hilfsversteifungen 28 bis 34, als auch zwischen den Versteifungselemente 22, 24, 26 und Hilfsversteifungen 28 bis 34 die Kreuzungsbereiche 42, 43 gebildet sind. Bevorzugterweise ist die zumindest eine Faser eine Endlosfaser aus Kohlenstoff, die aufgrund der mehrmaligen Wicklungen nach ihrem Aushärten einzelne, sich zwischen den Versteifungselementen 22, 24, 26 und den Hilfsversteifungen 28 bis 34 erstreckende und diese miteinander verbindende Kohlenstoffstäbe bilden. Die Faserstränge 36, 38, 40 sind demnach bei diesem Ausführungsbeispiel mehrfach abgewickelte Faserabschnitte einer Endlosfaser. Alternative Fasern sind Glasfasern, Aramidfasern und dergleichen. Das Harz ist bevorzugterweise ein Thermoplast, da sich Thermoplasten mit geringeren technischen Aufwand verarbeiten lassen als Duroplasten.

Insbesondere erstreckt sich die Wickelstruktur 48 in einem Bereich nahe der Vorderkante 14 bis zu einem Bereich nahe der Hinterkante 16. Das heißt, die Vorderkante 14 und die Hinterkante 16 an sich sind bei diesem Ausführungsbeispiel wickelstrukturfrei.

Wie in Figur 3 gezeigt, werden die Faserstränge in seitlichen Taschen 50, 52 der Versteifungselemente 22, 24, 26 und der Hilfsversteifungen 28 bis 34 geführt und bilden in diesen ihre Kreuzungsbereiche 42. Die Taschen 50, 52 haben abschnittsweise einen Vorsprung 54, der eine Einführöffnung 55 definiert 57 und bündig in benachbarte, die Form des Flossenstabilisators 1 vorgebende Umfangsabschnitte 72 der Versteifungselemente 26 bzw. Hilfsversteifungen 28 bis 34 übergeht. Entgegen der Darstellung liegen die Faserstränge 36, 38, 40 bevorzugterweise am Taschengrund 56 an und sind somit quasi in die Taschen 50, 52 hineingezogen. Die zeichnerische Beabstandung erfolgt hier lediglich zur besseren Illustration. Die jeweils benachbarten Taschen 50, 52 eines der Versteifungselemente 22, 24, 26 und der Hilfsversteifungen 28 bis 34 sind bevorzugterweise abwechselnd zueinander orientiert. So zeigt der Vorsprung 54 der Tasche 50 zur Hinterkante 16 und ein Vorsprung 57 der Tasche 52 zur Vorderkante 14. Wie in Figur 3 an dem flossenseitigen Versteifungselement 26 verdeutlicht, sind die sich in einer Tasche 50, 52 kreuzenden einzelnen Faserstränge 36, 38, 40 wiederrum beim endseitigen Umwickeln des flossenspitzenseitigen Versteifungselements 26 und des äußeren zentralstrukturseitigen Versteifungselements 22 zu einem querschnittsvergrößerten Faserstrangabschnitt 58 zusammengeführt.

Wie in Figur 4 gezeigt, ist an der Vorderkante 14 ein Aufprallschutz 60 ausgebildet, so dass bei einer versehentlichen Kontakt zwischen dem Flossenstabilisator 1 und einem Hindernis im Bereich seiner Vorderkante 14, die Wickelstruktur 48 nicht beschädigt und somit die Stabilität des Flossenstabilisators 1 erhalten bleibt.

Der Aufprallschutz 60 besteht wie die Wickelstruktur 48 aus einer Vielzahl von Fasersträngen 62, 64, die in eine Kunststoffmatrix eingebettet sind und von denen hier lediglich zwei Faserstränge 62, 64 beziffert sind. Die Faserstränge 62, 64 weisen beispielsweise eine parallele Faserführung aus. Jeder Faserstrang 62, 64 besteht dabei aus einer Vielzahl von Einzelfasern. Endseitig sind die Faserstränge 60, 62 jeweils auf das äußere Versteifungselement 22 der Zentralstruktur 44 und auf das flossenspitzenseitige Versteifungselement 26 geführt. Bevorzugterweise weist der Aufprallschutz 60 das gleiche Harzmaterial und das gleiche Fasermaterial wie die Wickelstruktur 48 auf. Hierdurch kann die Aufbringung des Aufprallschutzes 60 auf der gleichen Wickelmaschine wie die Aufbringung der Wickelstruktur 48 erfolgen.

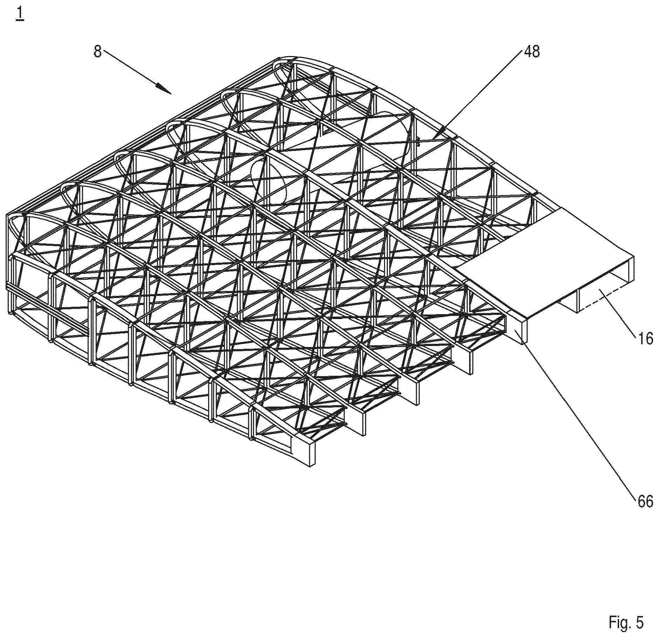

Gemäß Figur 5 sind bei diesem Ausführungsbeispiel an der Hinterkante 16 Anbindungsbereiche 66 zum unmittelbaren oder mittelbaren Befestigen einer insbesondere zur Hauptflosse 8 verschwenkbaren, nicht gezeigten Schwanzflosse ausgebildet. Aus Gründen der Übersichtlichkeit ist lediglich ein Anbindungsbereich 66 beziffert. Die Anbindungsbereiche 66 sind wickelstrukturfreie Endabschnitte der Versteifungselemente 22, 24, 26 und Hilfsversteifungen 28 bis 34 und bieten aufgrund ihrer Wickelstrukturfreiheit eine Vielzahl von Anbindungspunkten, ohne das auf einen Verlauf der Wickelstruktur 48 Rücksicht genommen werden muss.

In Figur 6 ist ein zweites Ausführungsbeispiel des erfindungsgemäßen Flossenstabilisators 2 gezeigt. Das zweite Ausführungsbeispiel hat ebenfalls eine H-förmige Zentralstruktur 44 mit zwei metallbasierten Versteifungselementen 22, 24 und einer die Versteifungselemente 22, 24 verbindenden metallbasierten Verbindungseinrichtung 20 zur Aufnahme einer Antriebswelle eines Flossenantriebs. Zudem hat das zweite Ausführungsbeispiel ebenfalls eine Hilfsstruktur 46 mit einer Vielzahl von kunststoffbasierten Hilfsversteifungen 28, 30, 32, 34 und mit einem flossenspitzenseitigen, bevorzugterweise metallbasierten, Versteifungselement 26. Ferner zeigt auch das zweite Ausführungsbeispiel eine kunststoffbasierte Wickelstruktur 48 mit einer Vielzahl sich in Kreuzungsbereichen 42, 43 kreuzenden Fasersträngen.

Ein Unterschied zum ersten Ausführungsbeispielen nach den Figuren 2 bis 5 besteht darin, dass zwischen den zentralstrukturseitigen Versteifungselementen 22, 24 keine Hilfsversteifung angeordnet ist, sondern stattdessen zwischen dem inneren Versteifungselement 24 der Zentralstruktur 44 und dem flossenspitzenseitigen Versteifungselement 26 sämtliche Hilfsversteifungen 28 bis 32 gleichmäßig voneinander beabstandet angeordnet sind. Die zentralstrukturseitigen Versteifungselemente 22, 24 sind hier im doppelten Abstand wie die Hilfsversteifungen 28 bis 32 zueinander angeordnet.

Weitere Unterschiede bestehen darin, dass die Versteifungselemente 22, 24 und Hilfsversteifungen 28 bis 34 eine spitze Vorderkante 14 und eine strömungslinienförmig auslaufende Hinterkante 16 bilden. Aufgrund der stromlinienförmigen Hinterkante 16 entfällt die Anordnung einer Schwanzflosse. Stattdessen ist die Wickelstruktur 48 bis auf die Hinterkante 16 des Flossenstabilisators 2 geführt und nicht von dieser beabstandet. Eine Beabstandung der Wickelstruktur 48 von der Vorderkante 14 und ein vorderkantenseitiger Aufprallschutz 60 ist jedoch auch bei diesem Ausführungsbeispiel vorgesehen.

Ferner besteht ein Unterschied zum ersten Ausführungsbeispiel nach den Figuren 1 bis 5 darin, dass die Versteifungselemente 22, 24 und die Hilfsversteifungen 28 bis 34 hier zwar auch als Gitterelemente gezeigt sind, sie jedoch noch über stabilisierende Kreuzelemente 68 zwischen ihren Stegen 49, 51 verfügen.

Der Aufbau der Wickelstruktur 48 und die Bildung bzw. Führung der Faserstränge 36, 38, 40 erfolgt gemäß dem ersten Ausführungsbeispiel. Insbesondere weisen auch bei dem zweiten Ausführungsbeispiel die Versteifungselemente 22, 24, 26 und Hilfsversteifungen 28 bis 34 Taschen 50, 52 zur Aufnahme der Faserstränge 36, 38, 40 und zur Bildung der Kreuzungsbereiche 42 auf.

In Figur 7 ist ein Detail eines dritten Ausführungsbeispiels des erfindungsgemäßen Flossenstabilisators 1 gezeigt. Das Detail zeigt einen Ausschnitt eines flossenseitigen Versteifungselementes 26 mit Kreuzungsbereichen 42, 43, 70 von Fasersträngen 36, 38, 40 einer Wickelstruktur 48. Im wesentlichen Unterschied zu den beiden vorhergehenden Ausführungsbeispielen nach den Figuren 2 bis 5 und 6 sind bei diesem Ausführungsbeispiel sämtliche Versteifungselemente 26 und Hilfsversteifungen 34 nicht als Gitterelemente, sondern als Vollelemente ausgeführt. Die Versteifungselemente 26 und die Hilfsversteifungen 34 sind quasi plattenartig mit einer entsprechenden Umfangskontur zur Formgebung des Flossenstabilisators 1. Die Materialen zur Bildung der Versteifungselemente 26 und der Hilfsversteifungen 34 als Vollelemente ist gleich den Materialien zur Bildung der Versteifungselemente 22, 24, 26 und der Hilfsversteifungen 28 bis 34 nach einem der vorhergehenden Ausführungsbeispiele als Gitterelemente. Selbstverständlich können auch einige Versteifungselemente und Hilfsversteifungen als Gitterelemente, und die übrigen Versteifungselemente und Hilfsversteifungen als Vollelemente ausgebildet sein.

Zudem sind in Figur 7 deutlich paarweise gegenüberliegenden Taschen 50, 52 zur Aufnahme der Faserstränge 36, 38, 40 zu erkennen. Die Taschen 50, 52 sind quasi Vertiefungen, die von einem Vorsprung 54, 57 bedeckt sind. Die Vorsprünge 54, 57 gehen bündig in benachbarte, die Form des Flossenstabilisators 1 vorgebende Umfangsabschnitte 72 der Versteifungselemente 26 bzw. Hilfsversteifungen 34 über. Die Faserstränge 36, 38, 40 sind hinter den Vorsprüngen 54, 57 geführt und bilden dort jeweils die Kreuzungsbereiche 42, 70. Zur Stabilisierung einer Außenhaut 10 im Bereich der Taschen 50, 52 ist zwischen den abwechselnd zueinander orientierten Taschen 50, 52 bzw. zwischen deren Vorsprüngen 54, 57 eine Erhebung 74 ausgebildet, die in einer Ebene mit den Vorsprüngen 54, 57 endet.

Im Folgenden wird ein erfindungsgemäßes Verfahren zur Herstellung eines erfindungsgemäßen Flossenstabilisators erläutert. Zuerst wird die Zentralstruktur 44 und die Hilfsstruktur 46 aufgebaut. Anschließend werden diese beiden Strukturen 44, 46 von den Fasersträngen 36, 38, 40 umwickelt und somit die Wickelstruktur 48 gebildet. In Abhängigkeit von dem verwendeten Fasermaterial wird die Zentralstruktur 44 mit einer eine Kontaktkorrosion verhindernden Grundierung vor dem Umwickeln versehen. Nach dem Bilden der Wickelstruktur 48 ist die Versteifungsstruktur 12 des Flossenstabilisators 1 gebildet.

Nach der Schaffung der Versteifungsstruktur 12 folgt die Bildung des Aufprallschutzes 60. Das Aufbringen des Aufprallschutzes 50 erfolgt bevorzugterweise auf der Wickelmaschine, die zur Wicklung der Wickelstruktur 48 verwendet wurde.

Nach dem Versehen der Versteifungsstruktur 12 mit dem Aufprallschutz 60 folgt das Aufbringen der Außenhaut 10. Hierzu wird zumindest ein Außenhautlaminat in eine erste Werkzeugform eines Formwerkzeugs und zumindest ein Außenhautlaminat in eine zweite Werkzeugform des Formwerkzeugs eingebracht. Beispielsweise ist die erste Werkzeugform eine untere Werkzeugform und die zweite Werkzeugform eine obere Werkzeugform. Die Außenlaminate werden innenseitig mit einem Verbindungsmaterial, bevorzugterweise ein Schaum, versehen. Dabei wird das Verbindungsmaterial bevorzugterweise so dick aufgetragen, dass die Wickelstruktur 48 vollständig in diesen eintauchen kann. Dann wird die Versteifungsstruktur 12 in die untere Werkzeugform eingelegt und die obere Werkzeugform auf dieser abgesenkt. Nach dem Schließen des Formwerkzeugs erfolgt das Aushärten des Flossenstabilisators 1.

Nach dem Aushärten des Flossenstabilisators 1 wird das Formwerkzeug geöffnet und Verbindungskanten zwischen der unteren und oberen Außenhaut werden nachbearbeitet.

Offenbart ist ein Flossenstabilisator zur Stabilisierung eines Wasserfahrzeugs, mit zumindest einer Flosse, die eine Hybridstruktur aus Metall und Kunststoff aufweist, wobei die Hybridstruktur eine Versteifungsstruktur mit einer metallbasierten Zentralstruktur und mit einer kunststoffbasierten Wickelstruktur aufweist, wobei die Zentralstruktur eine Verbindungseinrichtung zur Herstellung einer Wirkverbindung mit einem wasserfahrzeugseitigen Flossenantrieb und zur Drehmomenteneinleitung hat, ein Herstellungsverfahren sowie ein Wasserfahrzeug.

### Bezugszeichenliste

- 1: Flossenstabilisator
- 2: Schiffsrumpf
- 4: Flossenantrieb
- 6: Schwenkachse
- 8: Hauptflosse
- 10: Außenhaut
- 12: Versteifungsstruktur
- 14: Vorderkante
- 16: Hinterkante
- 18: Flossenspitze
- 20: Verbindungseinrichtung
- 22: Versteifungselement
- 24: Versteifungselement
- 26: Versteifungselement
- 28: Hilfsversteifung
- 30: Hilfsversteifung
- 32: Hilfsversteifung
- 34: Hilfsversteifung
- 36: Faserstrang
- 38: Faserstrang
- 40: Faserstrang
- 42: Kreuzungsbereich
- 43: Kreuzungsbereich
- 44: Zentralstruktur
- 46: Hilfsstruktur
- 47: Rahmen
- 48: Wickelstruktur
- 49: Steg
- 50: Tasche
- 51: Steg
- 52: Tasche
- 54: Vorsprung
- 55: Einführöffnung
- 56: Taschengrund
- 57: Vorsprung
- 58: Strangabschnitt
- 60: Aufprallschutz
- 62: Faserstrang
- 64: Faserstrang
- 66: Anbindungsbereich
- 68: Kreuzelement
- 70: Kreuzungsbereich
- 72: Umfangsabschnitt
- 74: Erhebung

## Patentansprüche

1. Flossenstabilisator (1) zur Stabilisierung eines Wasserfahrzeugs, mit zumindest einer Flosse (8), die über einen wasserfahrzeugseitigen Flossenantrieb (4) verschwenkbar ist und die eine mittels einer Versteifungsstruktur (12) versteifte Außenhaut (10) hat, wobei die Versteifungsstruktur (12) eine metallbasierte Zentralstruktur (44) mit einer Verbindungseinrichtung (20) zur Herstellung einer Wirkverbindung mit dem Flossenantrieb (4) und eine kunststoffbasierte Wickelstruktur (48) aufweist,
wobei die Wickelstruktur (48) jeweils in eine Kunststoffmatrix eingebettete, sich kreuzende Faserstränge (36, 38, 40) aufweist und die Zentralstruktur (44) umgreift.

2. Flossenstabilisator nach Anspruch 1, wobei die Zentralstruktur (44) voneinander beabstandete metallbasierte Versteifungselemente (22, 24) hat, die durch die Verbindungseinrichtung (20) miteinander verbunden sind.

3. Flossenstabilisator nach Anspruch 1 oder 2, wobei die Versteifungsstruktur (12) eine Hilfsstruktur (46) zum Ablegen der Faserstränge hat.

4. Flossenstabilisator nach Anspruch 3, wobei die Hilfsstruktur (46) Hilfsversteifungen (28, 30, 32, 34) aus einem anderen Material als die zentralstrukturseitigen Versteifungselemente (22, 24) aufweist.

5. Flossenstabilisator nach Anspruch 3 oder 4, wobei zwischen den zentralstrukturseitigen Versteifungselementen (22, 24) eine Hilfsversteifung (28) angeordnet ist.

6. Flossenstabilisator nach Anspruch 3, 4 oder 5, wobei flossenspitzenseitig ein metallbasiertes Versteifungselement (26) angeordnet ist.

7. Flossenstabilisator nach einem der vorhergehenden Ansprüche, wobei die Faserstränge (36, 38, 40) Faserabschnitte zumindest einer mehrfach verlegten Endlosfaser sind.

8. Flossenstabilisator nach einem der vorhergehenden Ansprüche, wobei die Faserstränge (36, 38, 40) in Taschen (50, 52) der Versteifungselemente (22, 24, 26) und Hilfsversteifungen (28, 30, 32, 34) abgelegt und hinter Vorsprüngen (54, 57) geführt sind.

9. Flossenstabilisator nach einem der vorhergehenden Ansprüche, wobei die Flosse (8) eine wickelstrukturfreie Vorderkante (14) mit einem Aufprallschutz (60) aufweist.

10. Flossenstabilisator nach einem der vorhergehenden Ansprüche, wobei die Flosse (8) eine wickelstrukturfreie Hinterkante (16) mit Anbindungsbereichen (66) zum Anbinden einer Schwanzflosse hat.

11. Flossenstabilisator nach einem der vorhergehenden Ansprüche, wobei die Außenhaut (10) kunststoffbasiert ist.

12. Flossenstabilisator nach einem der vorhergehenden Ansprüche, wobei die Wickelstruktur (48) in einem Verbindungsmaterial eingebettet ist, das mit der Außenhaut (10) innenseitig verbunden ist.

13. Verfahren zur Herstellung eines Flossenstabilisator (1) nach einem der vorhergehenden Ansprüche, wobei das Verfahren umfasst:
Aufbauen der Versteifungsstruktur durch Herstellen einer Zentralstruktur und einer Hilfsstruktur;
Bilden der Wickelstruktur durch Umwickeln der Zentralstruktur und der Hilfsstruktur mit Fasersträngen;
Aufbringen der Außenhaut durch Einbringen zumindest eines Außenhautlaminats in eine untere Werkzeugform eines Formwerkzeugs und zumindest eines Außenhautlaminats in eine obere Werkzeugform des Formwerkzeugs, wobei die Außenlaminate innenseitig mit einem Verbindungsmaterial versehen werden;
Einlegen der Versteifungsstruktur des Flossenstabilisators in die untere Werkzeugform und Absenken der oberen Werkzeugform;
Schließen des Formwerkzeugs und Aushärten des Flossenstabilisators;
Öffnen des Formwerkzeugs und Nachbearbeiten von Verbindungskanten zwischen der unteren und oberen Außenhaut.

14. Wasserfahrzeug mit zumindest zwei Flossenstabilisatoren (1) nach einem der Ansprüche 1 bis 12.

## Claims

1. Fin stabilizer (1) for stabilizing a watercraft, having at least one fin (8) which is pivotable by way of a fin drive (4) on the watercraft and which by means of a reinforcement structure (12) has a reinforced external skin (10), wherein the reinforcement structure (12) has a metal-based central structure (44) having a connection installation (20) for establishing an operative connection to the fin drive (4), and a plastics-based wound structure (48), wherein the wound structure (48) has mutually intersecting fibre strands (36, 38, 40) which in each case are embedded in a plastics matrix and encompasses the central structure (44).

2. Fin stabilizer according to Claim 1, wherein the central structure (44) has mutually spaced apart metal-based reinforcement elements (22, 24) which are interconnected by the connection installation (20).

3. Fin stabilizer according to either of Claims 1 and 2, wherein the reinforcement structure (12) has an auxiliary structure (46) for depositing the fibre strands.

4. Fin stabilizer according to Claim 3, wherein the auxiliary structure (46) has auxiliary reinforcements (28, 30, 32, 34) from a material that is dissimilar to the reinforcement elements (22, 24) on the central structure.

5. Fin stabilizer according to either of Claims 3 and 4, wherein an auxiliary reinforcement (28) is disposed between the reinforcement elements (22, 24) on the central structure.

6. Fin stabilizer according to either of Claims 3, 4, and 5, wherein a metal-based reinforcement element (26) is disposed on the tip of the fin.

7. Fin stabilizer according to one of the preceding claims, wherein the fibre strands (36, 38, 40) are fibre portions of at least one endless fibre that is laid up in multiples.

8. Fin stabilizer according to one of the preceding claims, wherein the fibre strands (36, 38, 40) are deposited in pockets (50, 52) of the reinforcement elements (22, 24, 26) and of the auxiliary reinforcements (28, 30, 32, 34), and are routed behind protrusions (54, 57).

9. Fin stabilizer according to one of the preceding claims, wherein the fin (8) has a leading edge (14) that is free from a wound structure and has an impact protector (60).

10. Fin stabilizer according to one of the preceding claims, wherein the fin (8) has a trailing edge (16) that is free from a wound structure and has attachment regions (66) for attaching a tail fin.

11. Fin stabilizer according to one of the preceding claims, wherein the external skin (10) is based on plastics.

12. Fin stabilizer according to one of the preceding claims, wherein the wound structure (48) is embedded in a connection material which is connected to the inside of the external skin (10).

13. Method for producing a fin stabilizer (1) according to one of the preceding claims, wherein the method comprises the following steps:
- constructing the reinforcement structure by producing a central structure and an auxiliary structure;
- forming the wound structure by wrapping the central structure and the auxiliary structure with fibre strands;
- applying the external skin by incorporating at least one external skin laminate in a lower mould of a forming tool, and at least one external skin laminate in an upper mould of the forming tool, wherein the external laminates on the inside are provided with a connection material;
- laying up the reinforcement structure of the fin stabilizer in the lower mould, and lowering the upper mould;
- closing the forming tool and curing the fin stabilizer;
- opening the forming tool and post-processing connecting edges between the lower and the upper external skin.

14. Watercraft having at least two fin stabilizers (1) according to one of Claims 1 to 12.

## Revendications

1. Stabilisateur à aileron (1) pour la stabilisation d'un bateau, comprenant au moins un aileron (8) qui peut pivoter par le biais d'un entraînement d'aileron (4) du côté du bateau et qui présente une peau extérieure (10) rigidifiée au moyen d'une structure de rigidification (12), la structure de rigidification (12) présentant une structure centrale (44) à base de métal avec un dispositif de liaison (20) pour établir une liaison fonctionnelle avec l'entraînement d'aileron (4) et une structure d'enveloppement (48) à base de plastique, la structure d'enveloppement (48) présentant à chaque fois des faisceaux de fibres s'entrecroisant (36, 38, 40) noyés dans une matrice de plastique et venant en prise autour de la structure centrale (44).

2. Stabilisateur à aileron selon la revendication 1, dans lequel la structure centrale (44) présente des éléments de rigidification (22, 24) à base de métal espacés les uns des autres, qui sont connectés les uns aux autres par le dispositif de liaison (20).

3. Stabilisateur à aileron selon la revendication 1 ou 2, dans lequel la structure de rigidification (12) présente une structure auxiliaire (46) pour déposer les faisceaux de fibres.

4. Stabilisateur à aileron selon la revendication 3, dans lequel la structure auxiliaire (46) présente des organes de rigidification auxiliaires (28, 30, 32, 34) en un matériau différent de celui des éléments de rigidification (22, 24) du côté de la structure centrale.

5. Stabilisateur à aileron selon la revendication 3 ou 4, dans lequel un organe de rigidification auxiliaire (28) est disposé entre les éléments de rigidification (22, 24) du côté de la structure centrale.

6. Stabilisateur à aileron selon la revendication 3, 4 ou 5, dans lequel un élément de rigidification (26) à base de métal est disposé du côté de la pointe de l'aileron.

7. Stabilisateur à aileron selon l'une quelconque des revendications précédentes, dans lequel les faisceaux de fibres (36, 38, 40) sont des portions de fibres d'au moins une fibre continue déplacée plusieurs fois.

8. Stabilisateur à aileron selon l'une quelconque des revendications précédentes, dans lequel les faisceaux de fibres (36, 38, 40) sont déposés dans des cavités (50, 52) des éléments de rigidification (22, 24, 26) et des organes de rigidification auxiliaires (28, 30, 32, 34) et sont guidés derrière des saillies (54, 57).

9. Stabilisateur à aileron selon l'une quelconque des revendications précédentes, dans lequel l'aileron (8) présente une arête avant (14) sans structure d'enveloppement, avec une protection contre les impacts (60).

10. Stabilisateur à aileron selon l'une quelconque des revendications précédentes, dans lequel l'aileron (8) présente une arête arrière (16) sans structure d'enveloppement, avec des régions de liaison (66) pour la liaison d'un aileron de queue.

11. Stabilisateur à aileron selon l'une quelconque des revendications précédentes, dans lequel la peau extérieure (10) est à base de plastique.

12. Stabilisateur à aileron selon l'une quelconque des revendications précédentes, dans lequel la structure d'enveloppement (48) est noyée dans un matériau de liaison qui est relié du côté intérieur avec la peau extérieure (10).

13. Procédé de fabrication d'un stabilisateur à aileron (1) selon l'une quelconque des revendications précédentes, le procédé comprenant :
la construction de la structure de rigidification par fabrication d'une structure centrale et d'une structure auxiliaire ;
la formation de la structure d'enveloppement par enveloppement de la structure centrale et de la structure auxiliaire avec des faisceaux de fibres ;
l'application de la peau extérieure par insertion d'au moins un stratifié de peau extérieure dans un moule d'outil inférieur d'un outil de moulage et d'au moins un stratifié de peau extérieur dans un moule d'outil supérieur de l'outil de moulage, les stratifiés extérieurs étant pourvus du côté intérieur d'un matériau de liaison ;
l'insertion de la structure de rigidification du stabilisateur à aileron dans le moule d'outil inférieur et l'abaissement du moule d'outil supérieur ;
la fermeture de l'outil de moulage et le durcissement du stabilisateur à aileron ;
l'ouverture de l'outil de moule et le post-traitement des arêtes de liaison entre la peau extérieure inférieure et supérieure.

14. Bateau comprenant au moins deux stabilisateurs à aileron (1) selon l'une quelconque des revendications 1 à 12.
